# EUROPÄISCHE PATENTSCHRIFT

(11) **EP 3 978 295 B1**
(45) Veröffentlichungstag und Bekanntmachung des Hinweises auf die Patenterteilung: **08.05.2024**
(21) Anmeldenummer: 21196388.9
(22) Anmeldetag: 13.09.2021
(51) Int. Cl.: B60K 35/00, B60R 1/00, B60W 30/12, B60W 50/14, G02B 27/01, G08G 1/16

(54) **FAHRSPURBEZOGENE VISUELLE ASSISTENZFUNKTION EINER HEAD-UP-DISPLAYEINRICHTUNG FÜR EIN KRAFTFAHRZEUG**
DRIVING TRACK RELATED VISUAL ASSISTANCE FUNCTION OF A HEAD-UP DISPLAY DEVICE FOR A MOTOR VEHICLE
FONCTION D'AIDE VISUELLE SE BASANT SUR LA VOIE DE CIRCULATION D'UN DISPOSITIF D'AFFICHAGE TÊTE HAUTE POUR VÉHICULE AUTOMOBILE

(30) Priorität: 05.10.2020 DE 102020212562
(43) Veröffentlichungstag der Anmeldung: 06.04.2022
(73) Patentinhaber: VOLKSWAGEN AG, 38440 Wolfsburg (DE)
(72) Erfinder: Kunze, Dr. Alexander, 13585 Berlin (DE); Haar, Adrian, 30173 Hannover (DE); Wittkämper, Michael, 38106 Braunschweig (DE); Sandbrink, Johanna, 38102 Braunschweig (DE); Sadovitch, Vitalij, 38102 Braunschweig (DE)

(56) Entgegenhaltungen:
- EP-A1- 3 088 268
- JP-A- 2005 038 225
- US-A1- 2017 154 554
- US-A1- 2019 106 121

## Beschreibung

Die Erfindung betrifft ein Verfahren zum Bereitstellen einer fahrspurbezogenen visuellen Assistenzfunktion mit einer Head-Up-Displayeinrichtung und eine solche Head-Up-Displayeinrichtung, wobei die Head-Up-Displayeinrichtung für ein Kraftfahrzeug vorgesehen ist. Bei dem Kraftfahrzeug (kurz: Fahrzeug) kann es sich insbesondere um einen Personenkraftwagen oder einen Lastkraftwagen handeln.

Head-Up-Displayeinrichtungen (kurz: Head-Up-Displays) zum Einblenden virtueller Objekte oder, mit anderen Worten, virtueller Inhalte in ein Blickfeld eines Fahrers sind auf dem Gebiet der Kraftfahrzeuge bekannt. Aus Sicht des Fahrers überlagern die eingeblendeten virtuellen Objekte die Umgebung. Die Einblendung kann bekanntermaßen an der Innenseite einer Windschutzscheibe erfolgen, z.B. durch Projizieren der Objekte darauf. Auch das Vorsehen gesonderter Projektionsflächen und insbesondere transparenter Projektionsscheiben ist bekannt, auf die die Objekte projiziert werden. Technologischer Hintergrund zu allgemeinen Head-Up-Displays offenbaren z.B. die US 2019/0043392 A1 und FR 3 060 774 A1.

Aus der DE 10 2019 206 490 B3 ist ferner eine Head-Up-Displayeinrichtung mit Erweiterte-Realität-Funktion bekannt. Dabei werden grafische Elemente in Abhängigkeit einer Distanz des Kraftfahrzeugs zu einem Objekt in der Umgebung des Kraftfahrzeugs derart eingeblendet, dass sie sich mit der Umgebung positionsgerecht überlagern. Dies kann auch als eine kontaktanaloge Einblendung bezeichnet werden.

Die DE 10 2017 220 268 A1 offenbart das Ermitteln einer Unsicherheit beim Erzeugen virtueller Einblendungen mit einer Head-Up-Displayeinrichtung und das darauf basierende Anpassen der Einblendungen.

Aus der US 9 403 436 B1 ist es ferner bekannt, einen Fahrer beim Halten einer Fahrspur (Spurhaltung) durch visuelle Einblendungen mit einer Head-Up-Displayeinrichtung zu unterstützen.

Aus der US 2019/106 121 A1 ist ein gattungsgemäßes Verfahren bekannt.

Aus der JP 2005 038 225 A ist ein ähnliches Verfahren bekannt, wobei in Abhängigkeit des Kennwertes die Farbe oder Form des Objekts verändert wird.

Aus der US 2017/154554 A1 ist ein ähnliches Verfahren bekannt, wobei bei Problemen der Kameraerfassung das Objekt durch Strukturen unterteilt wird.

Aus der EP 3 088 268 B1 ist ein Verfahren zum Bereitstellen einer fahrspurbezogenen visuellen Assistenzfunktion mit einer Head-Up-Displayeinrichtung für ein Kraftfahrzeug bekannt. Dabei werden Informationen betreffend einer aktuell befahrenen Fahrspur von einer Kamera und einer digitalen Karte ermittelt, wobei die Daten der Kamera als sicherer als die Daten der digitalen Karte in der Erfassungsreichweite der Kamera betrachtet werden. Dabei wird ein virtuelles Objekt eingeblendet, wobei sich das virtuelle Objekt aus einer Teildarstellung anhand der Daten der Kamera und einer daran anschließenden Teildarstellung anhand der Daten der digitalen Karte ergibt. Dabei werden die beiden Teildarstellungen optisch unterschiedlich dargestellt, sodass der Nutzer erkennt, welcher Teil der Fahrspurführung von den Daten der Kamera und welcher Teil aus den Daten der digitalen Karte stammt.

Es hat sich gezeigt, dass mit den bisherigen Lösungen Einblendungen nach wie vor nicht immer mit einer gewünschten Genauigkeit und/oder Situationsangemessenheit gelingen. Hierunter kann verstanden werden, dass die Einblendung von einem unzutreffend erfassten Umgebungszustand ausgehen können, der jedoch nicht einem tatsächlichen Umgebungszustand entspricht. Als Resultat kann die Einblendung im Blickfeld des Fahrers unzutreffend positioniert sein und/oder einen unzutreffenden Zustand der Umgebung anzeigen oder hervorheben. Ein Beispiel wäre das Einblenden eines gekrümmten Objekts, dass einen entsprechend gekrümmten Fahrspurverlauf hervorheben soll, wohingegen die reale Fahrspur tatsächlich krümmungsfrei ist.

Dies betrifft insbesondere fahrspurbezogene Einblendungen, die beispielsweise relativ zur Fahrspur zu positionieren sind und/oder deren Größe, Form, Krümmung und/oder Erstreckung sich an einer Fahrspur orientieren.

Es besteht somit ein Bedarf dafür, das fahrspurbezogene Einblenden von Objekten mit einer Head-Up-Displayeinrichtung zuverlässiger zu gestalten.

Diese Aufgabe wird durch ein Verfahren mit den Merkmalen des beigefügten Anspruchs 1 und eine Head-Up-Displayeinrichtung mit den Merkmalen des nebengeordneten Vorrichtungsanspruchs gelöst. Vorteilhafte Weiterbildungen sind in den abhängigen Ansprüchen angegeben.

Es wird allgemein vorgeschlagen, eine Unsicherheit betreffend das fahrspurbezogene Einblenden zu ermitteln, wie dies für allgemeine Einblendungen im Stand der Technik bereits teils beschrieben ist. Die vorliegende Lösung unterscheidet sich hiervon auch dadurch, dass die Einblendungen und in Abhängigkeit dieser Unsicherheit in Anbetracht ihrer Fahrspurbezogenheit situationsgerecht angepasst werden. Insbesondere wird hierfür vorgeschlagen, eine Länge eines eingeblendeten Objekts anzupassen und bevorzugt mit zunehmender Unsicherheit zunehmend zu reduzieren.

Allgemein erhält der Fahrer hierdurch eine visuelle Rückmeldung bezüglich der aktuellen Unsicherheit. Insbesondere wird aber das Risiko gemindert, dass der Fahrer nicht situationsgerechte Einblendungen erhält. Folglich wird also die Einblendungsgüte bzw. Güte der Assistenzfunktion verbessert. Hierfür müssen zwingend Erfassungsgenauigkeiten von Umfeldsensoren erhöht oder Steuereinrichtungen zur Analyse von Sensor- oder Kartendaten leistungsstärker ausgelegt werden. Stattdessen wird der Betrieb der Head-Up-Displayeinrichtung in Abhängigkeit der Unsicherheit angepasst, ohne das hardwareseitige Anpassungen zum Vermeiden unangebrachter Einblendungen zwingend sind.

Als weiterer Vorteil wurde erkannt, dass mit der offenbarten Lösung eine Diskrepanz zwischen einem von dem Objekt hervorgehobenen oder suggerierten Fahrspurverlauf (insbesondere einer Krümmung) und dem tatsächlichen Fahrspurverlauf geringer ausfallen kann. So hat sich gezeigt, dass insbesondere dem Fahrzeug weiter vorausliegende Fahrspurbereiche mit einer geringeren Genauigkeit erfassbar sein können oder die vorstehende Diskrepanz dort signifikanter ausfallen kann. Dies betrifft zum Beispiel den Fall des zu Fahrens auf einen Kreisverkehr oder eine Kreuzung. Dann können sich dort ändernde Krümmungen der Fahrspur unter Umständen nicht rechtzeitig erkannt und können als Objekte krümmungsfreie virtuelle Fahrspurbegrenzungen eingeblendet werden.

Erfindungsgemäß vorgeschlagen wird ein Verfahren zum Bereitstellen einer fahrspurbezogenen visuellen Assistenzfunktion mit einer Head-Up-Displayeinrichtung für ein Kraftfahrzeug, wobei das Verfahren aufweist:
- Erhalten von Informationen betreffend eine von dem Kraftfahrzeug aktuell befahrenen Fahrspur;
- Erhalten eines Kennwertes, der eine Unsicherheit betreffend das fahrspurbezogene Einblenden von als visuelle Assistenzfunktion dienenden virtuellen Objekten mit der Head-Up-Displayeinrichtung beschreibt;
- Einblenden wenigstens eines virtuellen Objekts als visuelle Assistenzfunktion, wobei das Objekt derart eingeblendet wird, dass es aus Fahrersicht zumindest abschnittsweise entlang der Fahrspur verläuft;
wobei eine Länge des Objekts entlang der Fahrspur nach Maßgabe des Kennwertes festgelegt wird, wobei zusätzlich eine Krümmung des Objekts nach Maßgabe des Kennwertes festgelegt wird

Das Verfahren kann auch den Schritt des Erfassens der Informationen betreffend die Fahrspur umfassen. Beispielsweise können diese mittels wenigstens einem Umfeldsensor (insbesondere einer die Fahrspur erfassenden Kamera) und/oder durch Analysieren von Kartendaten erfasst werden.

Die Informationen können eine räumliche Ausrichtung und/oder Position, wenigstens eine räumliche Abmessung (insbesondere die Breite) und/oder eine Krümmung (zum Beispiel einen Krümmungsradius) der Fahrspur betreffen. Allgemein kann hierin stets auf ein aus Fahrzeugsicht und/oder in Fahrtrichtung betrachtet vorausliegenden Bereich der aktuell befahrenen Fahrspur abgestellt werden.

Zusätzlich oder alternativ kann das Verfahren auch den Schritt des Ermittelns des Kennwertes betreffend die Unsicherheit umfassen. Allgemein kann dieser Wert eine Unsicherheit bezüglich der Angemessenheit und/oder Situationsgerechtigkeit der eingeblendeten Objekte quantifizieren. Beispielsweise kann hierdurch die Unsicherheit ausgedrückt werden, ob die Objekte tatsächlich geeignet in Bezug auf die Umgebung und insbesondere die Fahrspur im Blickfeld des Fahrers eingeblendet werden. Es kann sich also allgemein um eine Systemunsicherheit bei der Darstellung (insbesondere Positionierung, Orientierung oder allgemeine Erstreckung) eingeblendeter Objekte handeln. Dies kann maßgeblich davon abhängen, ob die Fahrspur bzw. die diesbezüglich relevanten Informationen ausreichend genau erfasst wird (zum Beispiel per Umfeldsensor oder aus Kartendaten).

Allgemein kann jeglicher Ansatz zum Ermitteln der Unsicherheit aus der DE 10 2017 220 268 A1 (dort als Kennwert der Systemunsicherheit bezeichnet) ebenfalls angewandt werden. Die diesbezüglichen Lehren der DE 10 2017 220 268 A1, wie dort insbesondere in [0024-0029] sowie [0047] und [0054] beschrieben, werden hierin per Bezugnahme übernommen. Weitere und insbesondere in Bezug auf Fahrspuren geeignete Quantifizierungen der Unsicherheit werden nachstehend noch erläutert.

Unter dem fahrspurbezogenen Einblenden kann verstanden werden, dass wenigstens eine Eigenschaft des Objekts abhängig von der Fahrspur bzw. der hiervon ermittelten Informationen oder Eigenschaften ist. Hierbei kann es sich zum Beispiel um eine Position, Größe, Erstreckung des Objekts handeln. Derartige Eigenschaften des Objekts werden vorzugsweise unabhängig von dem Kennwert festgelegt, d. h. die Länge und die Krümmung können die einzigen dynamisch und/oder variabel an die Unsicherheit anpassbaren Eigenschaften sein.

Allgemein kann das Verfahren computergesteuert ausgeführt werden, beispielsweise von einer Steuereinrichtung einer hierin offenbarten Head-Up-Displayeinrichtung. Die Steuereinrichtung kann wenigstens eine Prozessoreinrichtung und/oder wenigstens eine Speichereinrichtung umfassen. Auf der Speichereinrichtung können Programmanweisungen hinterlegt sein, die bei Ausführen durch die Prozessoreinrichtung die Steuereinrichtung dazu veranlassen, jegliche hierin erwähnten Schritte oder Maßnahmen auszuführen.

Allgemein kann es sich bei den Einblendungen um langgestreckte Einblendungen bzw. Objekte handeln. Diese können insbesondere linienförmig und beispielsweise durchgehend, durchbrochen oder gestrichelt sein. Die Objekte können parallel zu erfassten Fahrspurrändern oder auch -begrenzungen verlaufen. Sie können perspektivisch angepasst eingeblendet werden, also beispielsweise schräg und aufeinander zugeneigt hin zu einem virtuellen Horizont verlaufen.

Gemäß einer bevorzugten Weiterbildung ist die Assistenzfunktion eine Spurhalteassistenzfunktion und/oder eine Spurmittenführung. Hierunter können insbesondere visuelle Einblendungen verstanden werden, die es einem Fahrer erleichtern, die Fahrspur zu halten bzw. das Fahrzeug in der Spurmitte zu halten. Beispielsweise können die Einblendungen seitliche Fahrspurbegrenzungen visuell hervorheben und/oder visuell überdecken, um bei einem Spurhalten zu assistieren. Sie können in ihrer Farbgebung, Dimension oder hinsichtlich einer anderen Eigenschaft anpassbar sein. Dies kann als Signalwirkung bei einer Gefahr eines Verlassens der Fahrspur erfolgen. Insbesondere eine solche selektiv aktivierbare Signalwirkung kann dem Fahrer beim Spurhalten assistieren. Im Fall der Spurmittenführung kann die Spurmitte analog visuell hervorgehoben werden und kann diese Hervorhebung bei einer Gefahr des Verlassens der Spurmitte analog angepasst werden (z. B. hinsichtlich Farbgebung, Dimension oder hinsichtlich einer anderen visuell wahrnehmbaren Eigenschaft).

Erfindungsgemäß ist vorgesehen, dass eine Krümmung des Objekts nach Maßgabe des Kennwertes festgelegt wird. Beispielsweise kann dann, wenn der Kennwert eine hohe Unsicherheit anzeigt, eine Krümmung reduziert werden (allgemein je höher die Unsicherheit, desto weniger stark gekrümmt). Alternativ kann ab Überschreiten eines Schwellenwerts des Kernwertes, der einer maximal zulässigen Unsicherheit entspricht, die Krümmung auf ein maximal zulässiges Maß beschränkt werden. Alternativ kann die Krümmung dann auf im Wesentlichen 0 reduziert werden.

Dem liegt der Gedanke zugrunde, dass es bei Problemen beim Erfassen der Fahrspur zu Fehldetektionen von deren Krümmung kommen kann und/oder das Ergebnis der Krümmungsdetektion schnell aufeinanderfolgend wechseln kann. Dann kann es zu einem entsprechend schnell aufeinanderfolgenden Wechsel der Krümmung eingeblendeter Objekte kommen, was nicht der Realität entspricht und aus Fahrersicht verwirrend sein kann. Durch Reduzieren oder sogar Unterdrücken der Krümmung eingeblendeter Objekte können zumindest derartige schnell aufeinanderfolgenden Wechsel verhindert werden.

Zusätzlich oder alternativ kann eine Transparenz des Objekts nach Maßgabe des Kennwertes festgelegt werden (bevorzugt ist die Transparenz je höher, desto höher der Kennwert bzw. die Unsicherheit ist). Hierdurch kann angezeigt werden, dass das eingeblendete Objekt mit einer Unsicherheit behaftet ist, wird also eine Rückmeldung zur Detektionsgenauigkeit betreffend die Fahrspur erzeugt.

Allgemein kann der Kennwert je höher ausfallen, desto höher die Unsicherheit ist. Insbesondere kann hierzwischen ein proportionaler Zusammenhang bestehen.

Gemäß einem bevorzugten Aspekt ist der Kennwert abhängig von einer Erfassungsreichweite wenigstens einer die Fahrspur erfassenden Kameraeinrichtung. Die Kameraeinrichtung kann ein Beispiel von einem Umfeldsensor des Fahrzeugs sein. Unter der Erfassungsreichweite kann die Reichweite (oder, mit anderen Worten, die maximale Distanz) verstanden werden, innerhalb (bzw. bis zu) derer die Kameraeinrichtung Bildinformationen mit einer gewünschten Mindestqualität erfassen kann. Hierbei kann es sich um einen feststehenden und bekannten Parameter der Kameraeinrichtung handeln. Zusätzlich oder alternativ kann die Erfassungsreichweite dynamisch berechnet werden und beispielsweise abhängig von vom Fahrzeug erfassten Wetterbedingungen oder dergleichen sein. Je höher die Erfassungsreichweite, desto geringer kann der Kennwert und/oder die Unsicherheit sein.

Ferner sieht eine Weiterbildung vor, dass der Kennwert abhängig von einer Erfassungsqualität von Fahrspurmarkierungen ist. Hierfür können beispielsweise von einer Kameraeinrichtung erfasste Bildinformationen mit erwarteten Fahrspurmarkierungen (wie zum Beispiel aus Karteninformationen oder aus Vergleichen zu zeitlich versetzt erfassten Fahrspurmarkierungen ableitbar) abgeglichen werden.

Eine Weiterbildung sieht vor, dass der Kennwert abhängig von einer Nähe zu einem vorausliegenden Ort ist, an dem eine Lenkaktion des Kraftfahrzeugs (und/oder eine Krümmungs- oder Richtungsänderung der Fahrspur) erwartet wird. Insbesondere kann die Lenkaktion auf eine Krümmungsänderung der Fahrspur zurückzuführen sein, beispielsweise beim Einfahren in einen Kreisverkehr oder Abbiegen an einer Kreuzung. Derartige erwartete Lenkaktionen können anhand geplanter Fahrrouten (oder mit anderen Worten abzufahrender Navigationsrouten) ermittelt werden. Anhand von Ortsinformationen des Kraftfahrzeugs (zum Beispiel einer GPS-Position) kann die Nähe zu mit einer erwarteten Lenkaktion assoziierten Orten bestimmt werden.

Dieser Weiterbildung liegt der Gedanke zugrunde, dass sich Fahrspurmarkierungen an entsprechenden Orten signifikant verändern werden und/oder das Fahrzeug bestimmte Fahrspurmarkierungen gezielt kreuzt. Dann kann es schwierig sein, für eine gewählte Fahrspur und somit das Einblenden der Objekte aktuell relevante Fahrspurmarkierungen (oder auch anderweitige Eigenschaften der Fahrspur) zu erfassen. Entsprechend sieht diese Weiterbildung vor, derartige Orte vorab zu ermitteln und dort eine höhere Unsicherheit zu veranschlagen, um Fehleinblendungen virtueller Objekte zu verhindern.

Vorzugsweise sieht die offenbarte Lösung vor, dass der Kennwert fortlaufend aktualisiert wird und Länge des Objekts darauf basierend veränderlich festlegbar ist. Anders ausgedrückt kann also kontinuierlich festgestellt werden, ob Unsicherheiten auftreten bzw. welches Ausmaß diese annehmen und kann darauf basierend die Objektlänge dynamisch angepasst werden.

In diesem Zusammenhang kann insbesondere vorgesehen sein, dass das virtuelle Objekt einen unteren Bereich und einen oberen Bereich aufweist, wobei der untere Bereich näher an einer Unterkante eines Sichtfeldes der Head-Up-Displayeinrichtung ist als der obere Bereich und der obere Bereich näher an einer Oberkante des Sichtfeldes ist als der untere Bereich, und wobei zum Anpassen und dadurch veränderlichem Festlegen der Länge des virtuellen Objekts ein Abstand des oberen Bereichs zur Oberkante verändert wird (insbesondere stärker verändert wird als der Abstand des unteren Bereichs zur Unterkante).

Unter dem Sichtfeld kann derjenige Bereich verstanden werden, in dem die Head-Up-Displayeinrichtung Einblendungen vornehmen kann. Es kann sich um einen bekannten und durch die Hardwareeigenschaften der Head-Up-Displayeinrichtung festgelegten Parameter handeln. Die Unterkante kann dabei aus Sicht des Fahrers näherliegend als die Oberkante sein bzw. im Vergleich zur Oberkante mit einem näher liegenden Umgebungsbereich überlappen. Entsprechend können durch die obigen Abstandsänderungen virtuelle Einblendungen in aus Sicht des Fahrers näherliegenden Bereichen erfolgen. Dies stellt sicher, dass zumindest in diesen Bereichen eine unmittelbare Assistenz bereitgestellt ist. In weiter vorausliegenden Bereichen können hingegen noch zuverlässigere Fahrspurerfassungen und darauf basierend situationsgerechte Einblendungen erfolgen, wenn sich das Fahrzeug diesen Bereichen nähert. Allgemein wird hierdurch auch dem Umstand Rechnung getragen, dass Fahrspurerfassungen in größerer Distanz vom Fahrzeug mit größeren Unsicherheiten behaftet sein können.

Die Erfindung betrifft auch eine Head-Up-Displayeinrichtung für ein Kraftfahrzeug, die dazu eingerichtet ist:
- Informationen betreffend eine von dem Kraftfahrzeug aktuell befahrenen Fahrspur zu erhalten (zum Beispiel über eine Kommunikationsverbindung zu einem Umfeldsensor des Fahrzeugs und/oder durch bevorzugt von einer Steuereinrichtung der Head-Up-Displayeinrichtung ausgeführten Analyse von Kartendaten);
- einen Kennwert zu erhalten (oder mittels einer Steuereinrichtung der Head-Up-Displayeinrichtung auf Basis der erhaltenen Informationen zu ermitteln), der eine Unsicherheit betreffend das fahrspurbezogene Einblenden von als visuelle Assistenzfunktion dienenden virtuellen Objekten mit der Head-Up-Displayeinrichtung beschreibt;
- wenigstens ein virtuelles Objekt als visuelle Assistenzfunktion einzublenden, wobei das Objekt derart eingeblendet wird, dass es aus Fahrersicht entlang der Fahrspur verläuft, wobei eine Länge des Objekts entlang der Fahrspur nach Maßgabe des Kennwertes festgelegt wird, wobei zusätzlich eine Krümmung
des Objekts nach Maßgabe des Kennwertes festgelegt wird.

Bei der Steuereinrichtung der Head-Up-Displayeinrichtung kann es sich um eine Steuereinrichtung jeglicher hierin geschilderten Art handeln. Allgemein kann Head-Up-Displayeinrichtung dazu eingerichtet sein, ein Verfahren gemäß jeglichem hierin geschilderten Aspekt auszuführen. Hierfür kann sie jegliche erforderlichen Weiterbildungen und Merkmale aufweisen, um sämtliche hierin geschilderten Maßnahmen, Schritte und Effekte bereitzustellen. Ausführungsbeispiele der Erfindung werden im Folgenden anhand der beigefügten schematischen Figuren erläutert.
- Fig. 1: zeigt eine schematisch stark vereinfachte Head-Up-Displayeinrichtung gemäß einem Ausführungsbeispiel sowie eine hiermit erzeugte Einblendung virtueller Objekte, welche sich aus Fahrersicht mit der Umgebung überlagern.
- Fig. 2: zeigt eine zu Figur 1 analoge Einblendung, wobei infolge einer erhöhten Unsicherheit die virtuellen Objekte gegenüber dem Fall aus Figur 1 verkürzt sind.

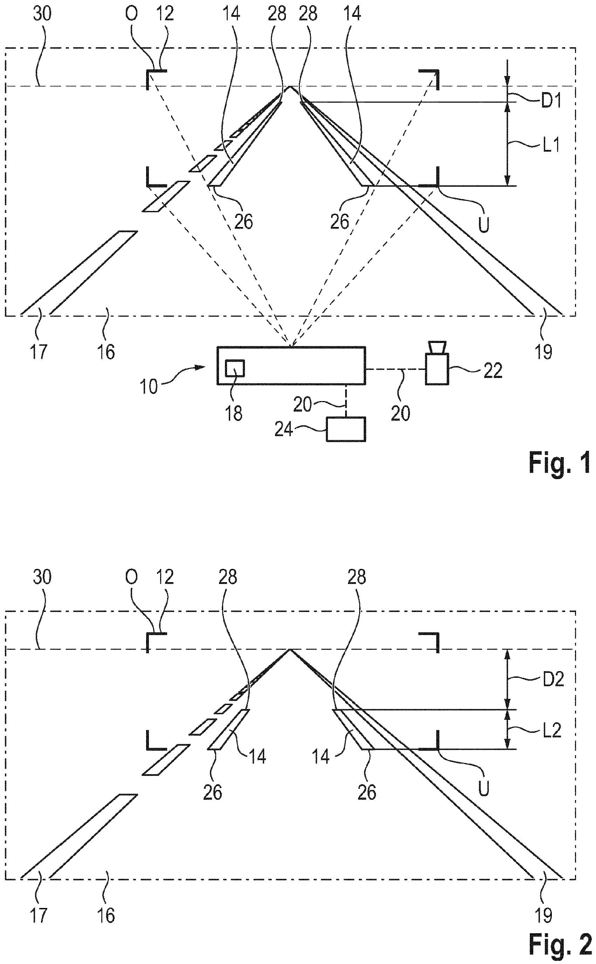

In Fig. 1 ist Head-Up-Displayeinrichtung (im Folgenden: HUD) 10 schematisch stark vereinfacht gezeigt. Diese ist für gewöhnlich in einem Armaturenbereich des Kraftfahrzeugs verbaut und für den Fahrer nicht einsehbar.

Die HUD 10 projiziert in ein Sichtfeld 12 virtuelle Objekte. Wie nachstehend noch erläutert, handelt es sich hierbei um zwei visuelle bzw. virtuelle Fahrspurbegrenzungen 14. Diese überlagern aus Fahrersicht die Umgebung und im gezeigten Fall eine Fahrspur 16, auf der sich das ansonsten nicht detailliert dargestellte Kraftfahrzeug befindet.

Die HUD 10 weist eine Steuereinrichtung 18 auf. Ferner ist sie als ein optionales Merkmal über eine Datenverbindung 20 mit einem Umfeldsensor und im gezeigten Beispiel einer Kameraeinrichtung 22 des Fahrzeugs 10 verbunden. Die Kameraeinrichtung 22 kann beispielsweise im Bereich der Windschutzscheibe positioniert sein bzw. durch diese hindurch in eine Vorwärtsfahrtrichtung blicken. Sie erfasst Bildinformationen der aktuell befahrenen Fahrspur 16.

Über eine weitere Datenverbindung 20 ist die HUD 10 bevorzugt mit einer Speichereinrichtung 24 verbunden. Diese kann optional in die HUD 10 integriert sein oder in eine andere Komponente des Fahrzeugs 10. Es kann sich auch um eine fahrzeugexterne Einrichtung und beispielsweise einen fahrzeugexternen Server handeln. Auf der Speichereinrichtung 24 sind Karteninformationen hinterlegt.

Die Steuereinrichtung 18 der HUD 10 ist dazu eingerichtet, gemäß jeglichen der hierin geschilderten Vorgehensweisen anhand der Karteninformationen und/oder der Bildinformationen der Kameraeinrichtung 22 vorbestimmte Eigenschaften der Fahrspur 16 zu ermitteln.

Hierbei handelt es sich insbesondere um eine Krümmung der Fahrspur 16 und oder deren allgemeine Erstreckung bzw. deren Verlauf. Daraus können auch entsprechende Eigenschaften von im Sichtfeld 12 enthaltenen Abschnitte der Fahrspur 16 ermittelt werden. Wie noch erläutert, werden die virtuellen Objekte 14 in Abhängigkeit von diesen Eigenschaften erzeugt (zum Beispiel gekrümmt) und eingeblendet.

Weiter ist die Steuereinrichtung 18 dazu eingerichtet, eine Unsicherheit der bezüglich der Fahrspur 16 erfassten Informationen (also Bildinformationen und/oder Karteninformationen) gemäß jeglichen der hierin geschilderten Ansätze zu ermitteln. Genauer gesagt quantifiziert sie diese Unsicherheit in Form eines Kennwerts, der bevorzugt mit zunehmender Unsicherheit steigt.

Die Steuereinrichtung 18 ist dazu eingerichtet, die virtuellen Objekte 14 nach Maßgabe der erfassten Eigenschaften der Fahrspur 16 aber auch des Kennwerts einzublenden. Dabei wird die Einblendung der virtuellen Objekte 14 und werden insbesondere deren Abmessungen dynamisch an sich ändernde Eigenschaften aber auch einem sich ändernden Kennwert angepasst.

In Figur 1 ist der Fall gezeigt, dass die Unsicherheit als sehr gering bewertet wird. Der Kennwert fällt entsprechend klein aus. Als virtuelle Spurhalteassistenz blendet die HUD 10 daraufhin im Wesentlichen ideale bzw. unveränderte virtuelle Objekte 14 mit einer maximalen Länge L1 ein.

Dabei sind die virtuellen Objekte 14 jeweils langgezogene und sich entlang der rechten und linken Fahrspurbegrenzungen 17, 19 erstreckende Linien. Sie verlaufen von einer aus Fahrersicht Unterkante U zu einer Oberkante O des Sichtfeldes 12, wobei der Verlauf zum Erzeugen eines perspektivischen Effektes optional analog zum Verlauf der Fahrspurbegrenzungen 17, 19 schräg aufeinander zugeneigt erfolgt.

In an sich bekannter Art und Weise dienen die virtuellen Objekte 14 als virtuelle Fahrspurbegrenzungen, die beispielsweise ihre Farbe ändern, wenn der Fahrer droht, die Fahrspur 16 zu verlassen. Hierdurch wird eine virtuelle (und insbesondere visuelle) Spurhalteassistenzfunktion bereitgestellt.

Die Objekte 14 weisen nahe der Unterkante U jeweils untere Bereiche 26 und nahe der Oberkante O jeweils obere Bereiche 28 auf. Ein Abstand der unteren Bereiche 26 zu Unterkante U beträgt im Wesentlichen konstant 0, d. h. die unteren Bereiche 26 erstrecken sich bis zu der Unterkante U.

Ein Abstand der oberen Bereiche 28 zu der Oberkante O entspricht aufgrund der maximalen Länge L1 der Objekte 14 einem einzuhaltenden Mindestabstand (nicht gesondert eingetragen). Alternativ kann dieser Abstand auch in Bezug auf einen künstlichen bzw. virtuellen Horizont 30 definiert sein und ist in Figur 1 beispielhaft als Abstand D1 eingetragen.

In Figur 2, in der die HUD 10 nicht noch einmal gesondert eingetragen ist, ist hingegen der Fall gezeigt, dass die Unsicherheit und damit auch der dazugehörige Kennwert hoch sind. Daraufhin wird die Länge der Objekte 14 gegenüber dem Szenario aus Figur 1 reduziert. Genauer gesagt wird die Länge auf den reduzierten Wert L2 verringert. Dabei verbleiben die unteren Bereiche 26 der Objekte 14 jeweils an der Unterkante U des Sichtfeldes 12. Die Längenreduzierung wird folglich dadurch erreicht, dass der Abstand der oberen Bereiche 28 der Objekte 14 zu Oberkante O des Sichtfeldes 12 vergrößert wird. Dies ist wiederum als damit einhergehender vergrößerter Abstand D2 gegenüber dem künstlichen Horizont 30 eingetragen.

### Bezugszeichenliste

- 10: Head-Up-Displayeinrichtung
- 12: Sichtfeld
- 14: virtuelles Objekt
- 16: Fahrspur
- 17, 19: Fahrspurbegrenzung
- 20: Datenverbindung
- 22: Kameraeinrichtung
- 24: Speichereinrichtung
- 26: unterer Bereich
- 28: oberer Bereich
- 30: künstlicher Horizont
- O: Oberkante
- U: Unterkante
- L1, L2: Länge
- D1, D2: Abstand

## Patentansprüche

1. Verfahren zum Bereitstellen einer fahrspurbezogenen visuellen Assistenzfunktion mit einer Head-Up-Displayeinrichtung (10) für ein Kraftfahrzeug, wobei das Verfahren aufweist:
- Erhalten von Informationen betreffend eine von dem Kraftfahrzeug aktuell befahrenen Fahrspur (16);
- Erhalten eines Kennwertes, der eine Unsicherheit betreffend das fahrspurbezogene Einblenden von als visuelle Assistenzfunktion dienenden virtuellen Objekten (14) mit der Head-Up-Displayeinrichtung (16) beschreibt;
- Einblenden wenigstens eines virtuellen Objekts (14) als visuelle Assistenzfunktion, wobei das Objekt (14) derart eingeblendet wird, dass es aus Fahrersicht zumindest abschnittsweise entlang der Fahrspur (16) verläuft;
wobei eine Länge (L1, L2) des Objekts (14) entlang der Fahrspur (16) nach Maßgabe des Kennwertes festgelegt wird, **dadurch gekennzeichnet, dass** zusätzlich eine Krümmung des Objekts (14) nach Maßgabe des Kennwertes festgelegt wird.

2. Verfahren nach Anspruch 1,
**dadurch gekennzeichnet, dass** die Assistenzfunktion eine Spurhalteassistenzfunktion ist.

3. Verfahren nach einem der vorangehenden Ansprüche,
**dadurch gekennzeichnet, dass** zusätzlich eine Transparenz des Objekts (14) nach Maßgabe des Kennwertes festgelegt wird.

4. Verfahren nach einem der vorangehenden Ansprüche,
**dadurch gekennzeichnet, dass** der Kennwert abhängig von einer Erfassungsreichweite wenigstens einer die Fahrspur (16) erfassenden Kameraeinrichtung (22) ist.

5. Verfahren nach einem der vorangehenden Ansprüche,
**dadurch gekennzeichnet, dass** der Kennwert abhängig von einer Nähe zu einem vorausliegenden Ort ist, an dem eine Lenkaktion des Kraftfahrzeugs erwartet wird.

6. Verfahren nach einem der vorangehenden Ansprüche,
**dadurch gekennzeichnet, dass** der Kennwert fortlaufend aktualisiert wird und die Länge (L1, L2) des Objekts (14) darauf basierend veränderlich festlegbar ist.

7. Verfahren nach Anspruch 6,
**dadurch gekennzeichnet, dass** das virtuelle Objekt (14) einen unteren Bereich (26) und einen oberen Bereich (28) aufweist, wobei der untere Bereich (26) näher an einer Unterkante (U) eines Sichtfeldes (12) der Head-Up-Displayeinrichtung (10) ist als der obere Bereich (28) und der obere Bereich (28) näher an einer Oberkante (O) des Sichtfeldes (12) ist als der untere Bereich (26), und
wobei zum Anpassen und dadurch veränderlichem Festlegen der Länge (L1, L2) des virtuellen Objekts (14) ein Abstand (D1, D2) des oberen Bereichs (28) zur Oberkante (O) verändert wird.

8. Verfahren nach Anspruch 7,
**dadurch gekennzeichnet, dass** ein Abstand des unteren Bereichs (26) zu der Unterkante (U) des Sichtfeldes (12) konstant bleibt und insbesondere konstant null beträgt.

9. Head-Up-Displayeinrichtung (10) für ein Kraftfahrzeug,
die dazu eingerichtet ist:
- Informationen betreffend eine von dem Kraftfahrzeug aktuell befahrenen Fahrspur (16) zu erhalten;
- einen Kennwert zu erhalten, der eine Unsicherheit betreffend das fahrspurbezogene Einblenden von als visuelle Assistenzfunktion dienenden virtuellen Objekten (14) mit der Head-Up-Displayeinrichtung (10) beschreibt;
- wenigstens ein virtuelles Objekt (14) als visuelle Assistenzfunktion einzublenden, wobei das Objekt (14) derart eingeblendet wird, dass es aus Fahrersicht entlang der Fahrspur (16) verläuft,
wobei eine Länge (L1, L2) des Objekts (14) entlang der Fahrspur (16) nach Maßgabe des Kennwertes festgelegt wird, **dadurch gekennzeichnet, dass** zusätzlich eine Krümmung des Objekts (14) nach Maßgabe des Kennwertes festgelegt wird.

## Claims

1. Method for providing a lane-related visual assistance function with a head-up display device (10) for a motor vehicle, wherein the method comprises:
- obtaining information regarding a lane (16) currently being driven along by the motor vehicle;
- obtaining a characteristic value that describes an uncertainty regarding the lane-related display of virtual objects (14) serving as a visual assistance function with the head-up display device (16);
- displaying at least one virtual object (14) as a visual assistance function, wherein the virtual object (14) is displayed such that it runs along at least a portion of the lane (16) from the perspective of a driver;
wherein
a length (L1, L2) of the object (14) along the lane (16) is determined in accordance with the characteristic value, **characterized in that** a curvature of the object (14) is also determined in accordance with the characteristic value.

2. Method according to Claim 1,
**characterized in that** the assistance function is a lane-keeping assistance function.

3. Method according to one of the preceding claims,
**characterized in that** a transparency of the object (14) is also determined in accordance with the characteristic value.

4. Method according to one of the preceding claims,
**characterized in that** the characteristic value is dependent on a detection range of at least one camera device (22) detecting the lane (16).

5. Method according to one of the preceding claims,
**characterized in that** the characteristic value is dependent on a proximity to an upcoming location at which a steering action by the motor vehicle is anticipated.

6. Method according to one of the preceding claims,
**characterized in that** the characteristic value is updated continuously, and the length (L1, L2) of the object (14) is determinable variably on the basis thereof.

7. Method according to Claim 6,
**characterized in that** the virtual object (14) has a lower region (26) and an upper region (28), wherein the lower region (26) is closer to a lower edge (U) of a field of view (12) of the head-up display device (10) than the upper region (28), and the upper region (28) is closer to a an upper edge (O) of the field of view (12) than the lower region (26), and
wherein a distance (D1, D2) from the upper region (28) to the upper edge (O) is altered to adjust and thereby variably determine the length (L1, L2) of the virtual object (14).

8. Method according to Claim 7,
**characterized in that** a distance from the lower region (26) to the lower edge (U) of the field of view (12) remains constant, and in particular is constantly zero.

9. Head-up display device (10) for a motor vehicle designed for
- obtaining information regarding a lane (16) currently being driven along by the motor vehicle;
- obtaining a characteristic value that describes an uncertainty regarding the lane-related display of virtual objects (14) serving as a visual assistance function with the head-up display device (10);
- displaying at least one virtual object (14) as a visual assistance function,
wherein the object (14) is displayed such that it runs along the lane (16) from the perspective of a driver,
wherein
a length (L1, L2) of the object (14) along the lane (16) is determined in accordance with the characteristic value, **characterized in that** a curvature (14) of the object is also determined in accordance with the characteristic value.

## Revendications

1. Procédé de fourniture d'une fonction d'assistance visuelle liée à la voie de roulement à l'aide d'un dispositif d'affichage tête haute (10) destiné à un véhicule automobile, le procédé comprenant les étapes suivantes :
- obtenir des informations concernant une voie de roulement (16) actuellement empruntée par le véhicule automobile ;
- obtenir une valeur caractéristique qui décrit une incertitude concernant l'affichage, lié à la voie de roulement, d'objets virtuels (14) servant de fonction d'assistance visuelle à l'aide du dispositif d'affichage tête haute (16) ;
- afficher au moins un objet virtuel (14) comme fonction d'assistance visuelle, l'objet (14) étant affiché de manière à ce que, du point de vue du conducteur, il s'étende au moins par portions le long de la voie de roulement (16) ;
une longueur (L1, L2) de l'objet (14) le long de la voie de roulement (16) étant déterminée en fonction de la valeur caractéristique, **caractérisé en ce qu'**une courbure de l'objet (14) est en outre déterminée en fonction de la valeur caractéristique.

2. Procédé selon la revendication 1,
**caractérisé en ce que** la fonction d'assistance est une fonction d'assistance au maintien de voie.

3. Procédé selon l'une des revendications précédentes,
**caractérisé en ce qu'**une transparence de l'objet (14) est en outre déterminée en fonction de la valeur caractéristique.

4. Procédé selon l'une des revendications précédentes,
**caractérisé en ce que** la valeur caractéristique dépend d'une portée de détection d'au moins un dispositif formant caméra (22) détectant la voie de roulement (16) .

5. Procédé selon l'une des revendications précédentes,
**caractérisé en ce que** la valeur caractéristique dépend de la proximité d'un emplacement en avant où une action de direction du véhicule automobile est attendue.

6. Procédé selon l'une des revendications précédentes,
**caractérisé en ce que** la valeur caractéristique est actualisée en continu et, sur cette base, la longueur (L1, L2) de l'objet (14) peut être déterminée de manière variable.

7. Procédé selon la revendication 6,
**caractérisé en ce que** l'objet virtuel (14) comporte une zone inférieure (26) et une zone supérieure (28), la zone inférieure (26) étant plus proche d'un bord inférieur (U) d'un champ de vision (12) du dispositif d'affichage tête haute (10) que la zone supérieure (28) et la zone supérieure (28) étant plus proche d'un bord supérieur (O) du champ de vision (12) que la zone inférieure (26), et
une distance (D1, D2) de la zone supérieure (28) au bord supérieur (O) étant modifiée afin d'adapter et ainsi de déterminer de manière variable la longueur (L1, L2) de l'objet virtuel (14).

8. Procédé selon la revendication 7,
**caractérisé en ce qu'**une distance entre la zone inférieure (26) et le bord inférieur (U) du champ de vision (12) reste constante et en particulier est constamment nulle.

9. Dispositif d'affichage tête haute (10) destiné à un véhicule automobile, lequel dispositif est conçu pour :
- obtenir des informations concernant une voie de roulement (16) actuellement empruntée par le véhicule automobile ;
- obtenir une valeur caractéristique qui décrit une incertitude concernant l'affichage, lié à la voie de roulement, d'objets virtuels (14) servant de fonction d'assistance visuelle à l'aide du dispositif d'affichage tête haute (10) ;
- afficher au moins un objet virtuel (14) comme fonction d'assistance visuelle, l'objet (14) étant affiché de manière à ce que, du point de vue du conducteur, il s'étende le long de la voie de roulement (16),
une longueur (L1, L2) de l'objet (14) le long de la voie de roulement (16) étant déterminée en fonction de la valeur caractéristique, **caractérisé en ce qu'**une courbure de l'objet (14) est en outre déterminée en fonction de la valeur caractéristique.
